# EUROPEAN PATENT SPECIFICATION

(11) **EP 2 252 791 B1**
(45) Date of publication and mention of the grant of the patent: **21.09.2011**
(21) Application number: 09706142.8
(22) Date of filing: 23.01.2009
(51) Int. Cl.: F03D 1/06, F03D 7/02, F03D 11/00

(54) **RETRACTABLE BLADE STRUCTURE WITH A SPLIT TRAILING EDGE**
EINZIEHBARE ROTORBLATTSTRUKTUR MIT GETEILTER AUSTRITTSKANTE
STRUCTURE DE PALE RÉTRACTABLE À BORD DE FUITE FENDU

(30) Priority: 30.01.2008 US 63132
(43) Date of publication of application: 24.11.2010
(73) Proprietor: Clipper Windpower, Inc., Carpinteria CA 93013 (US)
(72) Inventor: DEHLSEN, James, G. P., Montecito, CA 93013 (US)
(74) Representative: Zenz
(86) International application number: PCT/IB2009/000118
(87) International publication number: WO 2009/095758

(56) References cited:
- EP-A- 1 375 911
- WO-A-2005/017351
- US-A- 5 620 304
- US-A1- 2003 223 868

## Description

### CROSS-REFERENCE TO RELATED APPLICATIONS

International Application # PCT/IB2007/001969 "Retractable Rotor Blade Structure" filed July 12, 2007, assigned to Clipper Windpower Technology, Inc. the assignee of the present application is incorporated herein by reference.

### BACKGROUND OF THE INVENTION

### Field of the Invention

This invention relates to blades, such as airfoils or rotor blades, in the field of aviation (aircrafts or helicopters) or to blades of electric power-generating devices or fluid pumping devices, such as wind turbines and ocean current turbines, and more particularly to a structural support for a blade which has an outer aerodynamic module with a telescoping feature which, when extended out, increases the airfoil or blade diameter or length and generates more lift forces or, in the case of power-generating device rotor blades, captures more wind energy during periods of lower winds, and telescopes in (retracts) to reduce wind energy exposure in higher winds.

### DESCRIPTION OF THE PRIOR ART

The mechanisms suggested in the prior art for controlling variable diameter rotors for tilt rotors and aircraft are susceptible to fatigue failures and require extensive maintenance. Wind turbines and ocean current turbines operate in environmental conditions that can quickly degrade the properties of an extension mechanism. The high maintenance requirement translates to higher energy costs, which results in a less competitive renewable energy system.

For example, EP 1 375 911 A1 discloses a propeller type windmill for power generation, the windmill comprises a plurality of wind turbine blades that are distributed equiangular within a plane perpendicular to a horizontal rotating shaft and around a hub provided on the horizontal rotating shaft. The blade body of each turbine blade includes a tip auxiliary blade housed to be capable of extending toward and retracting away from a tip of the blade, and an auxiliary blade extension-and-retraction unit for protruding the tip auxiliary blade to increase the overall length of the blade.

US 2003/0223868 A1 discloses a telescoping wind turbine blade, the wind turbine blade made of a fixed blade section with an integral mounting flange for attachment to a wind turbine hub. A moveable blade section is attached to the fixed blade section and is free to move in a longitudinal direction relative to the fixed blade section. A positioning device controllably positions the moveable blade section to vary the overall length of the blade. This allows the wind turbine's rotor diameter to be adjusted. The present invention is also concerned with adjusting the length of the blade over the outer extremity of the blade to, in the case of power-generating device rotor blades, increase the rotor diameter for harnessing more of the wind during times of low wind speed, and reducing rotor diameter during periods of very high wind speeds to ensure that the device is not overstressed.

The structural system of International Application # PCT/IB2007/001969 provides support for an airfoil shell of power-generating device rotor blades by extending the structural beam (or spar) of the base blade through to the telescoping or extender module of the blade, both when it is retracted and extended. The structural system comprises a base blade and a detachable extender blade module, wherein the extender blade module includes a carrier airfoil shell and an extender blade.

Loads transmitted to the leading edge and the trailing edge of the carrier airfoil shell, for example lead-lag loads induced by gravity, have an adequate surface support on the leading edge, but due to the sharpness of the extender blade trailing edge there is no adequate support at the trailing edge and therefore the trailing edge requires a method of support.

Hence, it is an object of the present invention to provide an extendible blade structure with a method of support for the trailing edge.

What is also needed is a mechanism which will facilitates extension and retraction of extendible blades and which is lightweight, easily maintainable, and durable.

What is also needed is an extendible blade structure which is aerodynamically efficient.

### SUMMARY OF THE INVENTION

The present invention relates to extendible blades, and more particularly to a fluid flow (wind or water) power generating system, which includes a rotor blade capable of extension and retraction of a radius of sweep of the rotor blade to increase and decrease a cross-sectional area of fluid flow swept by the rotor blade.

It should be noted that the invention is not limited to the afore-mentioned field, but can also be applied to the field of aviation, such as airfoils of aircrafts or rotor blades of helicopters. To facilitate the description of the invention only rotor blades of power-generating devices are disclosed in detail.

In particular, the invention relates to an extendible blade or airfoil structure comprising an extender blade module and a base blade module, the extender blade module comprising a carrier airfoil shell housing an extender blade, and an adjusting device for positioning the extender blade between a retracted position within the carrier airfoil shell and an extended position. The adjusting device can move and lock the extender blade into any position between a fully extended position and a fully retracted position. For example, the adjusting device can move and lock the extender blade centered between the fully extended and fully retracted position, wherein in this position only a part of the extender blade is outside of the extender blade module, wherein the remaining part of the extender blade is arranged in the carrier airfoil shell of the extender blade module. The part of the extender blade within the airfoil carrier shell is referred to as the retracted part, and the part of the extender blade outside the airfoil carrier blade is referred to as the extended part. The extender blade and the carrier airfoil shell overlap across the length of the retracted part of the extender blade.

The extender blade is provided with trailing edge flaps and a support structure between the trailing edge flaps, wherein the trailing edge flaps are urged together to form a trailing edge in the extended position, i.e. over the length of the extended part of the extender blade.

The carrier airfoil shell is provided with a carrier airfoil shell support structure and slots formed at upper and lower sides of the carrier airfoil shell support structure, each slot being adapted to accommodate one of the flaps, the flaps being forced apart and guided into the slots by the carrier airfoil shell support structure in the retracted position of the extender blade, i.e. the flaps are accommodated by the slots over the length of the retracted part of the extender blade.

The carrier airfoil shell support structure and the support structure of the extender blade rest against each other between the flaps.

The extendible rotor blade structure of the present invention provides a method of support for the trailing edge of the carrier airfoil shell by providing an extender blade with a support structure and a support structure within the airfoil carrier shell of the extender blade module, wherein the support structures rest against each other. Loads, for example lead-lag loads induced by gravity, can be transmitted from the extender blade to the carrier airfoil shell of the extender blade module through the support structures of the extendible rotor blade structure without the danger of damaging the trailing edge of the carrier airfoil shell. Instead of transmitting the loads to the trailing edge of the carrier airfoil shell, loads are transmitted to the support structure within the carrier airfoil shell.

The extendible blade structure of the present invention also has the advantage of providing an aerodynamically efficient blade structure by providing an extender blade with trailing edge flaps. The flaps are urged together over the length of the extended part of the extender blade forming an aerodynamically efficient trailing edge of the extended part of the extender blade.

To achieve such urged together trailing edges at least one of the trailing edge flaps may comprise a material with some kind of "shape memory properties", i.e. the flap has the ability to return from a deformed state (temporary shape) to its original (permanent) shape. With reference to this application, the flap is in its deformed state when it is accommodated within a slot and is in its original shape when it is outside of a slot. In other words, over the length of the retracted part of the extender blade the flap is in the deformed state while the flap is in its original shape over the length of the extended part.

Where the extender blade exits the carrier airfoil shell, the state / shape of the flap changes; if the extender blade is retracted the flaps are forced apart and at least one of the flaps is guided by the support structure of the carrier airfoil shell into its corresponding slot changing its shape from its original state into the deformed state / temporary shape. To support the "opening" and guiding of the flap(s) the radial end face of the carrier airfoil shell support structure can be tapered. If the extender blade is extended, the flap(s) exiting the carrier airfoil shell is/are no longer forced apart by the support structure of the carrier airfoil shell and at least one of the flaps is urged by its "shape memory effect" into its original shape, wherein, together with the other flap, the aerodynamically efficient trailing edge of the extender blade is formed.

According to an aspect of the present invention, at least one of the trailing edge flaps comprises a material including a shape memory alloy. If only one of the flaps comprises such a material, the other flap can be rigid. A rigid flap is also guided into its corresponding slot but does not change its shape during the retraction. Accordingly, a rigid flap does not change its shape when the extender blade is extended - the flap simply slides out of its slot and keeps its shape. However, to achieve the best aerodynamic efficiency both flaps comprise the above-mentioned material.

To transmit loads from the extender blade to the carrier airfoil shell, the carrier airfoil shell support structure and the extender blade support structure rest against each other. While extending or retracting the extender blade its support structure slides on the support structure of the carrier airfoil shell.

The blade comprises two main parts, namely the base blade and the extender blade module, wherein the extender blade module comprises the carrier airfoil shell and the extender blade. The base blade and the extender blade can be formed integrally, however, it is preferred that the extender blade module is detachable from the base blade. With such a modular design of the blade structure it is preferred that all parts of the extendible rotor blade structure, which are necessary for extending and retracting the extender blade, i.e. the adjusting device, are arranged within the extender blade module. If any part of the adjusting device fails the extender blade module can be removed for maintenance and/or replaced by a new extender blade module.

In one embodiment of the present invention the support structures comprise parallel end faces, wherein the end face of the extender blade support structure slides over the end face of the support structure of the carrier airfoil shell during a movement of the extender blade. To facilitate such movement at least one of the end faces can be coated with a material providing a low frictional resistance. To further facilitate the movement of the end faces relative to each other, at least one of the support structures can comprise means, for example small passages, for providing a slip additive to the relevant end face(s).

In a preferred embodiment of the present invention the support structure of the extender blade comprises a plurality of linear roller bearings, and the carrier airfoil shell support structure comprises an end face being adapted to engage the linear roller bearings.

As mentioned above, the extender blade is provided with trailing edge flaps. To further enhance the aerodynamic efficiency of the trailing edge of the extender blade the extender blade may comprise two recesses adjacent to the trailing edge which substantially extend across the total length of the extender blade, wherein the flaps are attached to the extender blade within these recesses so that the flaps do not project from the surface of the extender blade.

Across the length of the retracted part of the extender blade the trailing edge flaps are stored in the slots of the carrier airfoil shell. During harsh weather conditions there is a risk that the flaps freeze to the surfaces of the slots if the flaps were damp or wet during retraction. Therefore, in a preferred embodiment of the present invention the trailing edge of the carrier airfoil shell comprises a heating installation, wherein it is preferred that the heating installation is arranged in the support structure of the carrier airfoil shell and extends across the overall length of the carrier airfoil shell support structure.

As mentioned above, the flaps can be attached to the extender blade within recesses. Due to the retracting and extending movement of the extender blade, and therefore the flaps, the flaps may lose their "shape memory properties". It is therefore preferred that the flaps are detachably attached within the recesses. In a preferred embodiment of the present invention the flaps can be attached within the recesses by a hot adhesive. If the hot adhesive is subjected to a higher temperature it melts or softens and therefore the flaps can be removed and replaced by new ones. To facilitate the replacing of the flaps, it is preferred that close to the recesses a heating installation is arranged. For example, such a heating installation can be arranged in the extender blade support structure.

### BRIEF DESCRIPTION OF THE DRAWINGS

The invention will be described in detail with reference to the drawings in which:
FIGURE 1 is a perspective view of a blade comprising a base blade section (or module), a carrier airfoil shell and an extender blade making up an extender module, with an extendible blade fully extended;
FIGURE 2 is a view of an extender module beam within the base blade, showing the base blade beam with the attachment end of the extender module attached thereto;
FIGURE 3 is a view of the extender module beam and the base blade beam of FIGURE 2 with the extender module beam, which can be made of aluminium, bolted inside the base blade beam;
FIGURE 4 is a more detailed view of the apparatus shown in FIGURE 2, showing the beam of the carrier airfoil shell, i.e. the extender module beam, the carrier airfoil shell itself, the base blade module, and the attachment joint of the carrier module to the base module;
FIGURE 5 is a more detailed view of the apparatus shown in FIGURE 4, showing the extender module beam within the carrier airfoil shell, the extender module beam comprising guide rails for linear bearings, linear cars attached to the guide rails of the extender module beam, the carrier airfoil shell itself, a carrier module face plate, and the attachment joint of the extender blade module to the base blade module;
FIGURE 6 is a cut-away diagram of the apparatus shown in FIGURE 5;
FIGURE 7 is a perspective view of the carrier airfoil shell and the extender blade, illustrating a split trailing edge of the extender blade;
FIGURE 8 is a cross-sectional diagram of the apparatus shown in FIGURE 7, taken along the view line VIII-VIII showing the carrier airfoil shell and the extender blade airfoil shell of a first embodiment of the invention;
FIGURE 9 is a cross-sectional diagram of the apparatus shown in FIGURE 7, taken along the view line VIII-VIII illustrating in more detail the first embodiment of the trailing edge joint shown in FIGURE 8;
FIGURE 10 is a cross-sectional diagram of the apparatus shown in FIGURE 7, taken along the view line VIII-VIII illustrating in more detail the extender blade and the carrier airfoil shell of a second embodiment of the invention;
FIGURE 11 is a cross-sectional diagram of the apparatus shown in FIGURE 7, taken along the view line VIII-VIII illustrating in more detail the carrier airfoil shell of the second embodiment; and
FIGURE 12 is a diagram of a wind turbine tower exemplarily illustrating how the extender blade module is lifted by a hoist in the nacelle.

In these figures, similar numerals refer to similar elements in the drawings. It should be understood that the sizes of the different components in the figures may not be to scale, or in exact proportion, and are shown for visual clarity and for the purpose of explanation.

### DESCRIPTION OF THE PREFERRED EMBODIMENTS

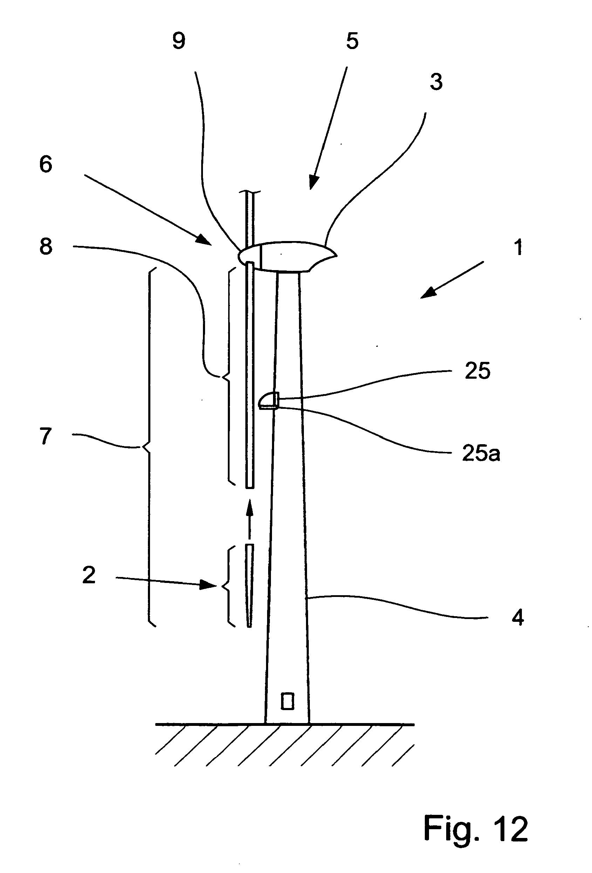

Refer to FIGURE 12, which is a diagram of a wind turbine tower 1 illustrating how the extender blade module 2 is lifted by a hoist in the nacelle 3. This embodiment comprises a detachable extender blade module 2, however the invention is not limited to wind turbines comprising blades 7 with detachable extender blade modules. The invention can also be applied, for example, to fluid pumping devices of ocean current turbines, airfoils of airplanes, or rotor blades of helicopters.

With respect to FIGURE 12, a wind power-generating device includes an electric generator housed in a turbine nacelle 3, which is mounted atop a tall tower structure 4 anchored to the ground. The turbine 5 is free to rotate in the horizontal plane such that it tends to remain in the path of the prevailing wind current. The turbine has a rotor 6 with blades 7, which may be pitchable and rotate in response to wind current. Each of the blades has a base blade section (or module) 8, referred to as a root blade, attached to a rotor hub 9 and a blade extension referred to as an extender blade module 2 that is variable in length to provide a variable diameter rotor. The tower structure comprises a port 25 and a fold-down hatch 25a which, when opened, extends a ramp for servicing and module replacement.

The rotor diameter is controlled to fully extend the rotor 6 at low flow velocity and to retract the rotor as flow velocity increases such that the loads delivered by or exerted upon the rotor do not exceed set limits. The wind power-generating device is held by the tower structure 4 in the path of the wind current such that the power-generating device is held in place horizontally in alignment with the wind current.

An electric generator is driven by the turbine to produce electricity and is connected to power carrying cables interconnecting the generator to other units and/or to a power grid.

Power capture from wind and ocean current turbines is directly proportional to the cross-sectional area swept by the turbine's rotor blades. Conventional rotors utilize blades of fixed length, joined at a rotating hub. These blades may be of variable pitch (selectively rotatable about their longitudinal axes) in order to alter the angle of attack relative to the incoming fluid flow, principally for power shedding in high flow velocities. Alternatively, these blades may be fixed pitch or stall-regulated, wherein blade lift and therefore power capture falls off dramatically as wind speeds exceed some nominal value. Both variable pitch and stall regulated rotor blades with fixed diameters are well known in the art. The above-identified US Patent 6,726,439 B2 describes a wind or water flow energy converter comprising a wind or water flow actuated rotor assembly. The rotor comprises a plurality of blades, wherein the blades are variable in length to provide a variable diameter rotor. The rotor diameter is controlled to fully extend the rotor at low flow velocity and to retract the rotor as flow velocity increases such that the loads delivered by or exerted upon the rotor do not exceed set limits.

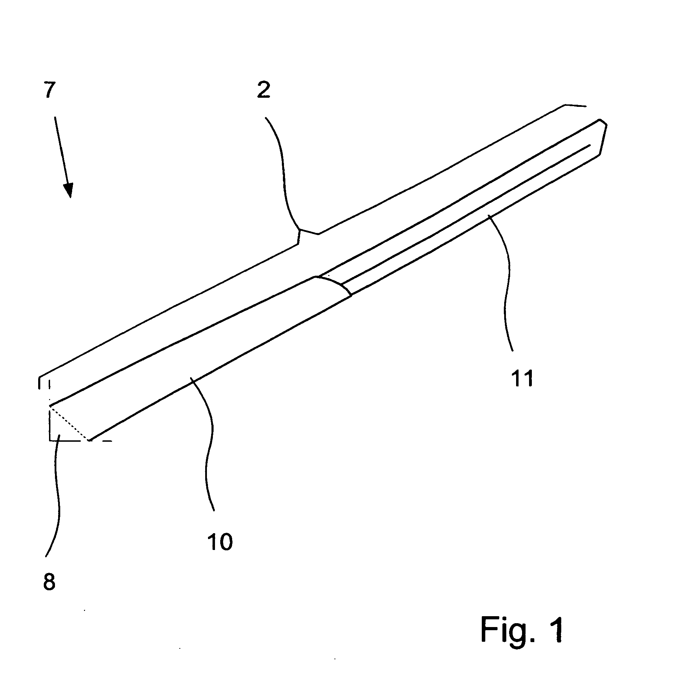

Refer to FIGURE 1, which is a perspective view of a part of a blade 7 comprising a base blade section 8, a carrier airfoil shell 10 and extender blade 11 making up an extender blade module 2, with the extendible blade 7 fully extended.

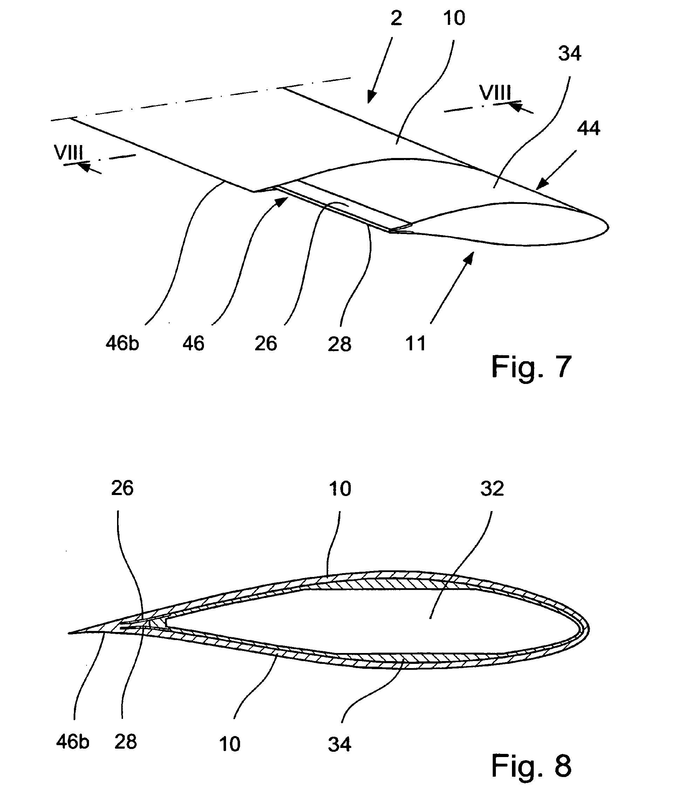

This invention relates to a method and apparatus of providing structural support for a wind turbine rotor blade 7 which has an outer aerodynamic extender blade module 2 connected to a base blade section 8. The extender blade module 2 has a telescoping extender blade 11 which, when extended out, increases the rotor diameter and captures more wind energy during periods of lower winds, and telescopes in (retracts) to reduce wind energy exposure in higher winds. The basis for developing the structural system of the present invention is the fact that the carrier airfoil shell 10 has a cross-sectional shape, which is not suitable for structural adaptation to a telescoping action given the forces acting on the blade from wind thrust, gravity and centrifugal force. The structural system therefore is intended to provide support for the airfoil shell of the extender blade 11 by providing a split trailing edge airfoil when the extender blade 11 is extended. A detailed description of the structural system is given with reference to FIGURES 7 - 10.

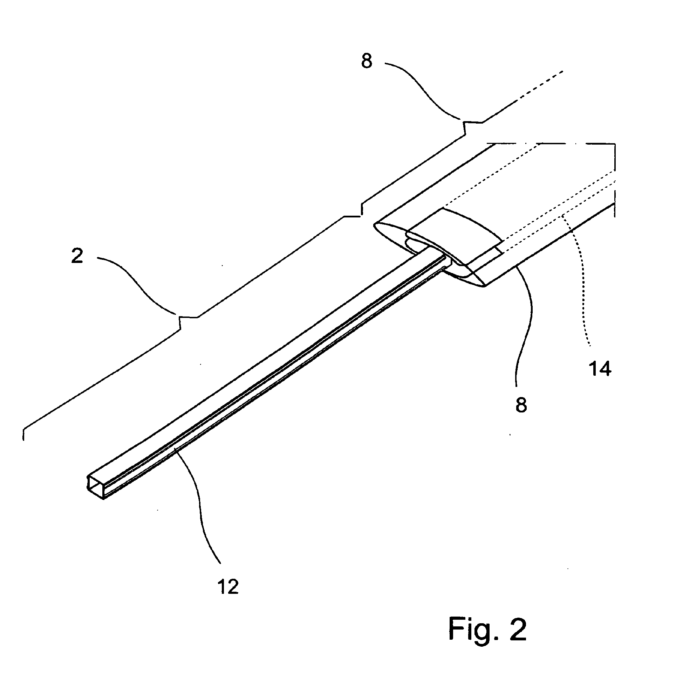

FIGURES 2 - 6 disclose the features and the adjusting device of the extender blade module 2 and how this module is connected to the base section 8 of a blade 7.

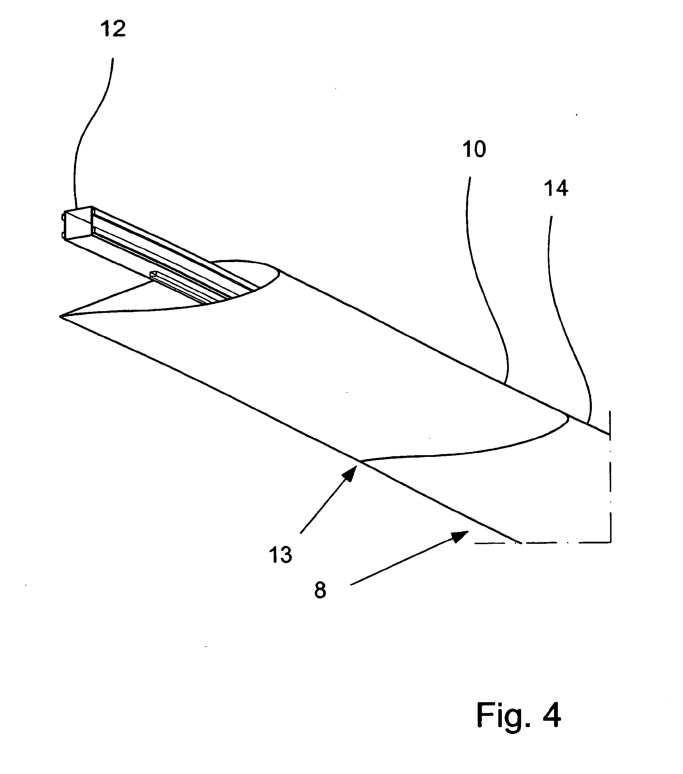

FIGURES 2-4 illustrate an extender module beam 12 which extends through the carrier airfoil shell 10 and, depending on the position of the extender blade, through the extender blade (FIGURE 4), wherein the extender module beam 12 is connected to a base blade beam 14, which extends through the base blade section 8. As it is shown in FIGURE 4, the carrier airfoil shell 10 is connected to the base blade section 8 at an attachment joint 13. However, the carrier airfoil shell 10 is not connected with the extender module beam 12 although the extender module beam 12 extends through the entire carrier airfoil shell 10.

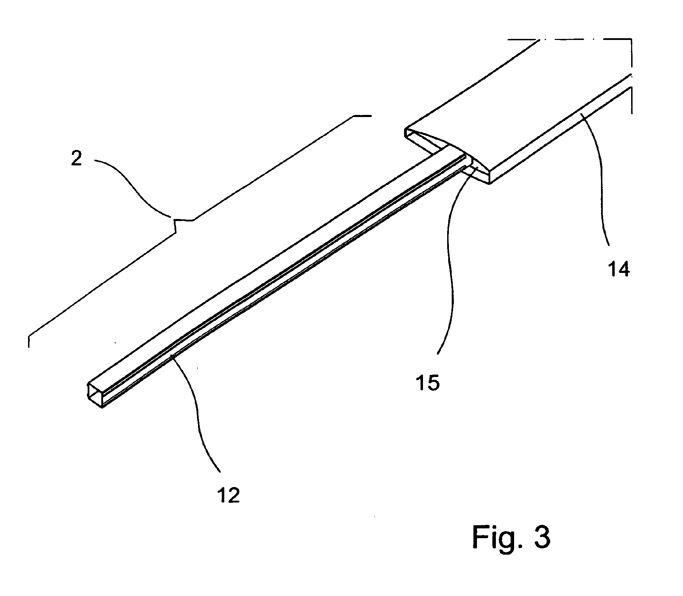

The extender module beam 12 (FIGURE 2) extends from the module attachment end, mounts to the attachment faceplate 15 (FIGURE 3), and extends through the carrier airfoil shell 10 (FIGURE 4). As mentioned above, this design does not have the extender module beam 12 attached to either the top inside or bottom inside of the carrier airfoil shell 10.

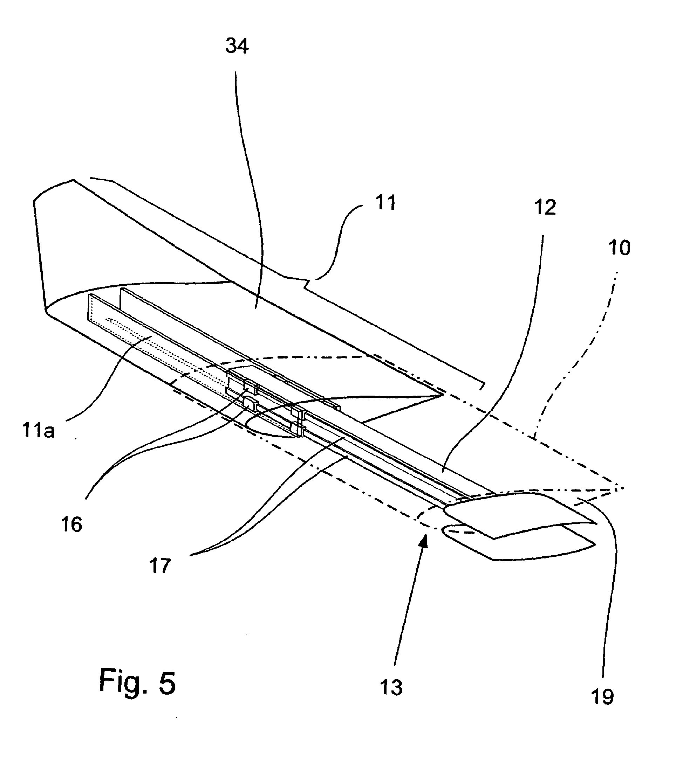

Refer to FIGURE 5, which is a more detailed view of the apparatus shown in FIGURE 4 showing the extender module beam 12 of the carrier airfoil shell 10. An adjusting device for the extender blade 11 includes a number of linear cars 16 connected to the extender blade 11 that run along guide rails 17. The extender module beam 12 comprises the guide rails 17, wherein the linear cars 16 are attached to the guide rails 17. The guide rails 17 are attached to a beam within extender blade 11, i.e. the extender blade beam 11a. The linear cars 16 are moveably attached to the guide rails 17 so that the movement of the extender blade 11 is guided by the combination of the rails and the cars.

Furthermore, FIGURE 5 shows the carrier airfoil shell 10, an extender blade module face plate 19, and the attachment joint 13 of the carrier airfoil shell 10 to the base blade section 8. FIGURE 5 also indicates the retracted and the extended part of the extender blade 11. The retracted part of the extender blade 11 is defined by the overlapping area of the carrier airfoil shell 10 and the extender blade 11, i.e. the retracted part of the extender blade is the part housed within the carrier airfoil shell 10. The non-overlapping or "free" part of the extender blade 11 defines the extended part.

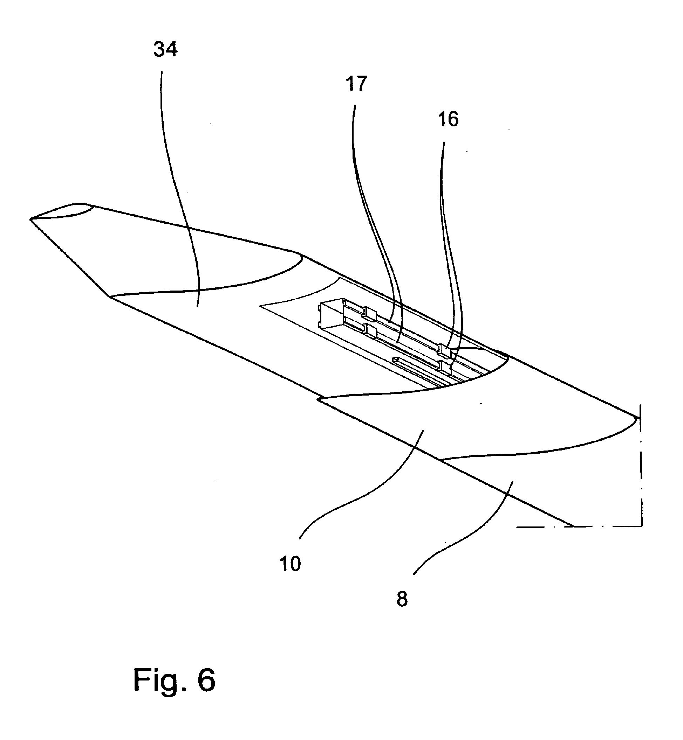

FIGURE 6 is a cut-away diagram of the apparatus shown in FIGURE 5.

The only structural support the carrier airfoil shell 10 has is at the module attachment end faceplate 19 (part of the attachment joint 13, FIGURE 5) and at the end where the carrier airfoil shell 10 overlaps with the extender blade 11, and there, riding on the airfoil shell 34 of the extender blade 11. The extender module beam 12 overlaps with the extender blade beam 11a and the beams slide over each other in extension or retraction operations.

Refer to FIGURE 7, which is a perspective view of the carrier airfoil shell 10, and the extender blade airfoil shell 34, the extender blade airfoil shell 34 comprising a split extender blade trailing edge 46 and an extender blade leading edge 44. FIGURE 7 illustrates in some detail the extender blade trailing edge 46, which comprises two trailing edge flaps 26, 28. However, FIGURE 7 does not illustrate how the extender blade 11 is guided in the carrier airfoil shell 10. Further, FIGURE 7 shows the trailing edge 46b of the carrier airfoil shell 10.

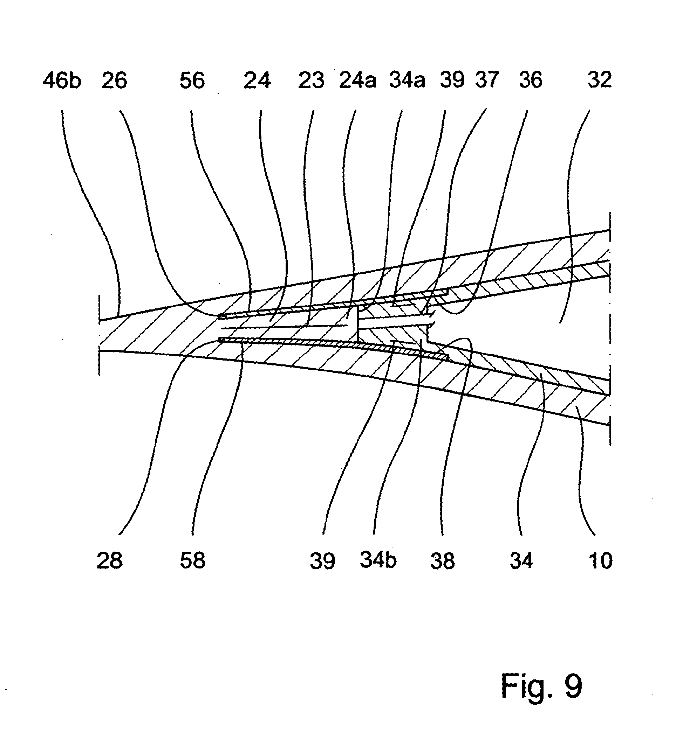

FIGURE 8, which is a cross-sectional diagram of the apparatus shown in FIGURE 7 taken along the view line VIII-VIII, illustrates a first embodiment of the present invention. FIGURE 8 shows the carrier airfoil shell 10, the extender blade airfoil shell 34 and an extender blade core 32. FIGURE 9 shows a more detailed cross-sectional diagram of the trailing edge joint shown in FIGURE 8.

The first embodiment, shown in FIGURES 8 and 9, illustrates one method for a support structure of the trailing edge 46 of the extender blade 11. The trailing edge 46b of the carrier airfoil shell 10 is adapted to provide such support by providing a carrier airfoil shell support structure 24. The carrier airfoil shell support structure 24 is arranged within the hollow carrier airfoil shell 10, extends from the inner trailing edge into the hollow carrier airfoil shell 10 and ends in a blunt end face 24a. The cross section of the carrier airfoil shell support structure 24 is formed so that it (i) is adapted to the aerodynamic cross section of the carrier airfoil shell 10 and (ii) provides two slots 56, 58 between the carrier airfoil shell support structure 24 and the carrier airfoil shell 10, one slot 56 above and one slot 58 beneath the carrier airfoil shell support structure 24.

The extender blade 11 within the carrier airfoil shell 10 comprises an extender blade airfoil shell 34 and a core 32, wherein the core 32 may comprise a lightweight material, such as balsa wood, polystyrene foam, or a similar lightweight material. The core 32 can also provide a mixture of different materials or a sandwich structure. The airfoil shell 34 comprises a fibreglass or carbon fibre and is glued to the core 32.

The trailing edge 34b of the extender blade airfoil shell 34 ends in a blunt end face 34a. The end faces 24a, 36a are blunt to ensure the necessary load transmission from the extender blade 11 to the carrier airfoil shell 10. With the shown embodiment the end faces 24a and 34a are flat, however, such design of the end faces is not essential as long as load transmission is ensured. During the extension and retraction of the extender blade 11 the end face 34a of the extender blade airfoil shell 34 slides over the end face 24a of the carrier airfoil shell 10.

The airfoil shell 34 of the extender blade 11 comprises two recesses or channels 36, 38 at the area of the trailing edge 34b which substantially extend across the total length of the extender blade 11, or at least the portion of the extender blade 11 which can be retracted into the carrier airfoil shell 10. Within the recesses 36, 38, one of which is located at the bottom surface of the extender blade 11 and the other at the upper surface of the extender blade 11, two trailing edge flaps 26, 28 are located. The trailing edge flaps 26, 28 extend over the end face 34a of the extender blade airfoil shell 34 and are shaped so that they can be accommodated by the slots 56, 58. The flaps 26, 28 comprise a material with some kind of "shape memory properties", i.e. the flaps 26, 28 have the ability to return from a deformed state (temporary shape) to their original (permanent) shape. Their original shape is the closed aerodynamic shape which is shown in FIGURE 7. The deformed state of the flaps 26, 28 is shown in FIGURES 8, 9, i.e. the flaps are forced open by the carrier airfoil shell support structure 24 and accommodated by the slots 56, 58.

To further facilitate the movement of the end faces 24a, 34a relative to each other, a passage 37 (FIGURE 9) for providing a slip additive to the end faces 24a, 34a is arranged in the trailing edge 34b. The slip additive may be provided by a (not shown) device within the core 32.

Within the trailing edge 46b of the carrier airfoil shell 10, more precisely within the support structure 24 of the carrier airfoil shell, a heating installation 23 is arranged extending across the overall length of the carrier airfoil shell support structure 24.

To facilitate the replacing of the flaps 26, 28 a heating installation 39 is arranged adjacent to the recesses 36, 38. In the shown embodiment, the heating installation 39 is arranged in the extender blade support structure 34b.

Both heating installations 23, 39 are energized by an (not shown) energy source which is connected with the heating installations by (not shown) wires.

FIGURE 9 illustrates an overlapping portion of the extender module 2, i.e. a portion where the extender blade 11 is housed in the carrier airfoil shell 10. The flaps 26, 28 are opened, i.e. in their deformed state, and stored in the slots 56, 58, and the two end faces abut upon each other, thereby forming a non-closed aerodynamic shape.

When the retracted extender blade 11 is extended, the trailing edge flaps 26, 28 are released by the carrier airfoil shell support structure 24, i.e. there is no longer any force which spreads apart the trailing edge flaps 26, 28. Due to the shape memory properties of the flaps' material they return into their original aerodynamic state. Appropriate materials enabling this effect are alloys of the type of, for example, Ni-Ti, Cu-Zn, Cu-Zn-Al, Cu-Zn-Si, Cu-Zn-Sn, Cu-Al-Ni, or shape-memory-polymers.

When, on the other hand, the extender blade 11 is retracted, the trailing edge flaps 26, 28 are forced to spread apart by the carrier airfoil shell support structure 24, which allows the carrier airfoil shell support structure 24 to enter between the flaps 26, 28, open the flaps, and expose the end face 24a of the carrier airfoil shell support structure 24 to the end face 34a of the extender blade airfoil shell 34. The now open flaps 26, 28 are stored in the slots 56, 58 provided for this purpose in the carrier airfoil shell 10.

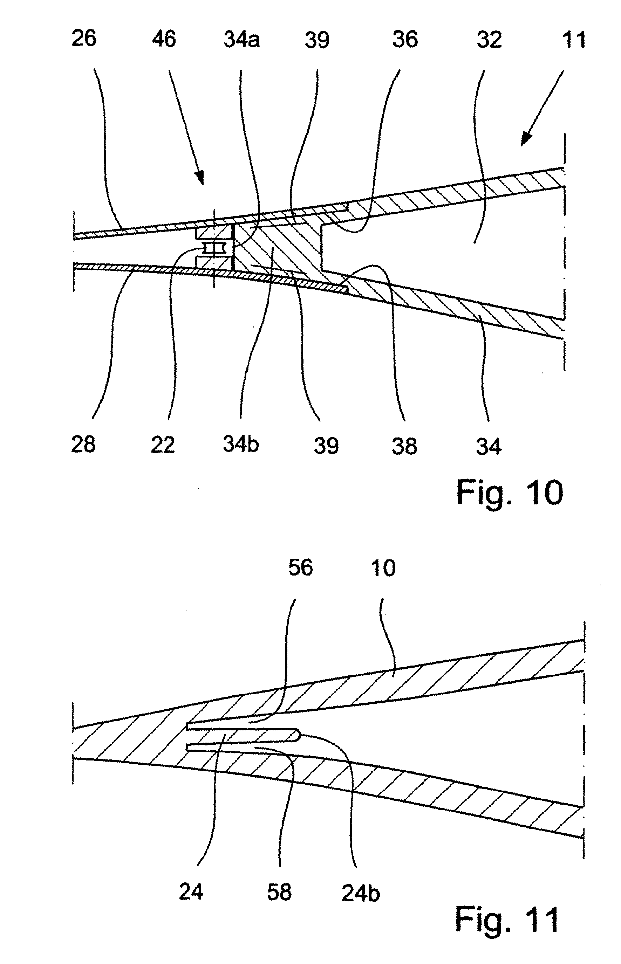

Refer to FIGURES 10 and 11, which show a cross-sectional diagram in more detail of a second embodiment of the present invention.

The end face 34a of the trailing edge 34b of the extender blade airfoil shell 34 comprises a linear roller bearing 22 which is provided between the flaps 26, 28 of the extender blade airfoil shell 34. Although only one linear roller bearing 22 is shown, a plurality of these roller bearings 22 is arranged over the length of the extender blade 11.

At the trailing edge 46b of the carrier airfoil shell 10 a carrier airfoil shell support structure 24 with a rounded end face 24b is provided. The carrier airfoil shell support structure 24 in the shape of a carrier blade track inside the trailing edge 46b of the carrier airfoil shell 10 engages the linear roller bearing 22 of the extender blade airfoil shell 34.

The trailing edge flaps 26, 28, are brought together by the shape memory properties of the flap material (for details see above) and provide aerodynamic efficiency. As the extender blade 11 is retracted, the flaps 26, 28 are forced to spread apart by the carrier airfoil support structure 24, which allows the carrier airfoil shell support structure 24 to enter between the flaps 26, 28.

Drag is the rearward force on the rotor blade. Stall occurs when the air no longer flows smoothly over the top of the blade but separates from the top of the blade before reaching the trailing edge. When a rotor blade stalls, it incurs an increase in drag.

To summarize the above, in accordance with the invention, the extender blade 11 retracts inside the carrier airfoil shell 10. The two blade sections, i.e. the carrier airfoil shell 10 and the extender blade 11, are matched in shape and slide skin on skin (or shell on shell) when the blade/airfoil is extending or retracting. The trailing edge 34b of the extender blade 11 is blunt to ride smoothly so as not to damage or wedge the carrier airfoil shell 10 via the lead-lag loading. The trailing edge flaps 26 and 28 (fairing plates) restore a sharp trailing edge for aerodynamic purposes when the extender blade is extended, but split apart so that a carrier airfoil shell support structure 24 can ride smoothly against the blunt support structure of the extender blade.

While the invention has been particularly shown and described with reference to preferred embodiments thereof, it will be understood by those skilled in the art that the foregoing and other changes in form and detail may be made therein without departing from the scope of the invention, as defined by the appended claims.

## Claims

1. An extendible blade structure comprising an extender blade module (2) and a base blade module (8), the extender blade module (2) comprising a carrier airfoil shell (10) housing an extender blade (11), and
an adjusting device for positioning the extender blade (11) between a retracted position within the carrier airfoil shell (10) and an extended position,
**characterized in that**
the extender blade (11) is provided with trailing edge flaps (26, 28) and a support structure (34b) between the trailing edge flaps (26, 28), the flaps (26, 28) being urged together to form a trailing edge in the extended position,
the carrier airfoil shell (10) is provided with a carrier airfoil shell support structure (24) and slots (56, 58) formed at upper and lower sides of the carrier airfoil shell support structure (24), each slot (56, 58) being adapted to accommodate one of the flaps (26, 28), the flaps (26, 28) being forced apart and guided into the slots (56, 58) by the carrier airfoil shell support structure (24) in the retracted position of the extender blade (11), and that
the carrier airfoil shell support structure (24) and the support structure (34b) of the extender blade (11) rest against each other between the flaps (26, 28).

2. The extendible blade structure of claim 1, **characterized in that** the support structure (34b) of the extender blade (11) comprises a plurality of linear roller bearings (22), and
the carrier airfoil shell support structure (24) comprises an end face (24b) being adapted to engage the linear roller bearings (22).

3. The extendible blade structure according to claim 1 or 2, **characterized in that** the extender blade (11) comprises two recesses (36, 38) adjacent to the trailing edge, which substantially extend over the total length of the extender blade (11).

4. The extendible blade structure according to any of the preceding claims, **characterized in that** at least one of the flaps (26, 28) comprises a material including a shape memory alloy.

5. The extendible blade structure according to any of the preceding claims, **characterized in that** the trailing edge (46b) of the carrier airfoil shell (10) comprises a heating installation (23).

6. The extendible blade structure according to claim 5, **characterized in that** the heating installation (23) is arranged in and extends across the overall length of the carrier airfoil shell support structure (24).

7. The extendible blade structure according to any of the claims 3 - 6, **characterized in that** the flaps (26, 28) are detachably attached within the recesses (36, 38).

8. The extendible blade structure according to claim 7, **characterized in that** the flaps (26, 28) are attachable within the recesses (36, 38) by a hot adhesive.

9. The extendible blade structure according to any of the claims 3 - 8, **characterized in that** close to the recesses (36, 38) a heating installation (39) is arranged.

10. The extendible blade structure according to claim 9, **characterized in that** the heating installation (39) is arranged in the support structure (34b) of the extender blade (11).

11. The extendible blade structure according to any of the preceding claims, **characterized in that** at least one of the end faces (24a, 34a) of the support structures (24, 34b) is coated with a material providing a low frictional resistance.

12. The extendible blade structure according to any of the preceding claims, **characterized in that** at least one of the support structures (24, 34b) comprises means (37), preferably small passages, for providing a slip additive to the relevant end face (s) (24a, 34a).

## Patentansprüche

1. Eine ausfahrbare Rotorblattstruktur, aufweisend:
ein Extender-Blattmodul (2) und ein Basis-Blattmodul (8), wobei das Extender-Blattmodul (2) eine ein Extender-Blatt (11) aufnehmende Träger-Tragflächenhülle (10) und eine Justiereinrichtung zum Positionieren des Extender-Blattes (11) zwischen einer eingezogenen Stellung in der Träger-Tragflächenhülle (10) und einer ausgefahrenen Stellung aufweist,
**dadurch gekennzeichnet,**
**dass** das Extender-Blatt (11) mit Hinterkante-Klappen (26, 28) und einer Stützstruktur (34b) zwischen den Hinterkante-Klappen (26, 28) bereitgestellt ist, wobei die Klappen (26, 28) in der ausgefahrenen Stellung zum Ausbilden einer Hinterkante aneinandergedrückt sind,
**dass** die Träger-Tragflächenhülle (10) mit einer Träger-Tragflächenhülle-Stützstruktur (24) und in der Unter- und der Oberseite der Träger-Tragflächenhülle-Stützstruktur (24) ausgebildeten Nutzen (56, 58) bereitgestellt ist, wobei jede Nut (56, 58) angepasst ist, eine der Klappen (26, 28) aufzunehmen, wobei die Klappen (26, 28) in der eingezogenen Stellung des Extender-Blattes (11) von der Träger-Tragflächenhülle-Stützstruktur (24) auseinandergespreizt sind und in die Nuten (56, 58) geführt sind, und
**dass** die Träger-Tragflächenhülle-Stützstruktur (24) und die Stützstruktur (34b) des Extender-Blattes (11) zwischen den Klappen (26, 28) aneinander anliegen.

2. Die ausfahrbare Rotorblattstruktur nach Anspruch 1,
**dadurch gekennzeichnet, dass** die Stützstruktur (34b) des Extender-Blattes (11) eine Mehrzahl von Linearrollenlagern (22) aufweist, und
dass die Träger-Tragflächenhülle-Stützstruktur (24) eine Stirnfläche (24b) aufweist, die angepasst ist, mit den Linearrollenlagern (22) zusammenzuwirken.

3. Die ausfahrbare Rotorblattstruktur nach Anspruch 1 oder 2, **dadurch gekennzeichnet, dass** das Extender-Blatt (11) zwei Vertiefungen (36, 38) benachbart zu der Hinterkante aufweist, welche sich im Wesentlichen über die gesamte Länge des Extender-Blattes (11) erstrecken.

4. Die ausfahrbare Rotorblattstruktur nach einem der vorhergehenden Ansprüche, **dadurch gekennzeichnet, dass** zumindest eine der Klappen (26, 28) ein Material mit einer Formgedächtnislegierung aufweist.

5. Die ausfahrbare Rotorblattstruktur nach einem der vorhergehenden Ansprüche, **dadurch gekennzeichnet, dass** die Hinterkante (46b) der Träger-Tragflächenhülle (10) eine Heizeinrichtung (23) aufweist.

6. Die ausfahrbare Rotorblattstruktur nach Anspruch 5,
**dadurch gekennzeichnet, dass** die Heizeinrichtung (23) in der Träger-Tragflächenhülle-Stützstruktur (24) angeordnet ist und sich über die gesamte Länge dieser erstreckt.

7. Die ausfahrbare Rotorblattstruktur nach einem der Ansprüche 3 bis 6, **dadurch gekennzeichnet, dass** die Klappen (26, 28) lösbar in den Vertiefungen (36, 38) befestigt sind.

8. Die ausfahrbare Rotorblattstruktur nach Anspruch 7,
**dadurch gekennzeichnet, dass** die Klappen (26, 28) mit einem Heizkleber in den Vertiefungen (36, 38) befestigbar sind.

9. Die ausfahrbare Rotorblattstruktur nach einem der Ansprüche 3 bis 8, **dadurch gekennzeichnet, dass** in der Nähe der Vertiefungen (36, 38) eine Heizeinrichtung (39) angeordnet ist.

10. Die ausfahrbare Rotorblattstruktur nach Anspruch 9,
**dadurch gekennzeichnet, dass** die Heizeinrichtung (39) in der Stützstruktur (34b) des Extender-Blattes (11) angeordnet ist.

11. Die ausfahrbare Rotorblattstruktur nach einem der vorhergehenden Ansprüche, **dadurch gekennzeichnet, dass** zumindest eine der Stirnflächen (24a, 34a) der Stützstrukturen (24, 34b) mit einem einen geringen Reibungswiderstand bereitstellenden Material beschichtet ist.

12. Die ausfahrbare Rotorblattstruktur nach einem der vorhergehenden Ansprüche, **dadurch gekennzeichnet, dass** zumindest eine der Stützstrukturen (24, 34b) Mittel (37), vorzugsweise kleine Durchtritte, zum Bereitstellen eines Gleitmittels bei der bzw. den entsprechenden Stirnflächen (24a, 34a) umfasst.

## Revendications

1. Structure de pale extensible comprenant
un module de pale d'allongement (2) et un module de pale de base (8),
le module de pale d'allongement (2) comprenant une coque aérodynamique support (10) servant à loger une pale d'allongement (11), et
un dispositif de réglage servant à positionner la pale d'allongement (11) entre une position rétractée à l'intérieur de la coque aérodynamique support (10) et une position déployée,
**caractérisée en ce que**
la pale d'allongement (11) est pourvue de volets de bord de fuite (26, 28) et d'une structure de soutien (34b) située entre les volets de bord de fuite (26, 28), les volets (26, 28) étant l'objet d'une sollicitation les réunissant pour former un bord de fuite dans la position déployée,
la coque aérodynamique support (10) est pourvue d'une structure de soutien de coque aérodynamique support (24) et de fentes (56, 58) ménagées à l'endroit de faces supérieure et inférieure de la structure de soutien de coque aérodynamique support (24), chaque fente (56, 58) étant adaptée pour recevoir l'un des volets (26, 28), les volets (26, 28) étant l'objet d'une force les écartant et étant guidés dans les fentes (56, 58) par la structure de soutien de coque aérodynamique support (24) dans la position rétractée de la pale d'allongement (11), et **en ce que**
la structure de soutien de coque aérodynamique support (24) et la structure de soutien (34b) de la pale d'allongement (11) sont en appui l'une sur l'autre entre les volets (26, 28).

2. Structure de pale extensible de la revendication 1, **caractérisée en ce que** la structure de soutien (34b) de la pale d'allongement (11) comprend plusieurs roulements à rouleaux (22) rectilignes, et
la structure de soutien de coque aérodynamique support (24) comprend une face d'extrémité (24b) adaptée pour coopérer avec les roulements à rouleaux (22) rectilignes.

3. Structure de pale extensible suivant la revendication 1 ou 2, **caractérisée en ce que** la pale extensible (11) comporte deux évidements (36, 38) adjacents au bord de fuite, qui s'étendent sensiblement sur toute la longueur de la pale d'allongement (11).

4. Structure de pale extensible suivant l'une quelconque des revendications précédentes, **caractérisée en ce qu'**au moins l'un des volets (26, 28) comprend une matière comportant un alliage à mémoire de forme.

5. Structure de pale extensible suivant l'une quelconque des revendications précédentes, **caractérisée en ce que** le bord de fuite (46b) de la coque aérodynamique support (10) comporte une installation chauffante (23).

6. Structure de pale extensible suivant la revendication 5, **caractérisée en ce que** l'installation chauffante (23) est disposée dans la structure de soutien de coque aérodynamique support (24) et s'étend d'une extrémité à l'autre de toute la longueur de celle-ci.

7. Structure de pale extensible suivant l'une quelconque des revendications 3 - 6, **caractérisée en ce que** les volets (26, 28) sont fixés d'une manière séparable à l'intérieur des évidements (36, 38).

8. Structure de pale extensible suivant la revendication 7, **caractérisée en ce que** les volets (26, 28) peuvent être fixés à l'intérieur des logements (36, 38) au moyen d'un adhésif à chaud.

9. Structure de pale extensible suivant l'une quelconque des revendications 3 - 8, **caractérisée en ce que**, à proximité des évidements (36, 38), est disposée une installation chauffante (39) .

10. Structure de pale extensible suivant la revendication 9, **caractérisée en ce que** l'installation chauffante (39) est disposée dans la structure de soutien (34b) de la pale d'allongement (11).

11. Structure de pale extensible suivant l'une quelconque des revendications précédentes, **caractérisée en ce qu'**au moins l'une des faces d'extrémité (24a, 34a) des structures de soutien (24, 34b) est revêtue d'une matière offrant une faible résistance au frottement.

12. Structure de pale extensible suivant l'une quelconque des revendications précédentes, **caractérisée en ce qu'**au moins l'une des structures de soutien (24, 34b) comprend des moyens (37), de préférence de petits passages, servant à fournir un lubrifiant à la ou aux face(s) d'extrémité (24a, 34a) pertinentes.
